# EUROPÄISCHE PATENTSCHRIFT

(11) **EP 1 414 917 B1**
(45) Veröffentlichungstag und Bekanntmachung des Hinweises auf die Patenterteilung: **13.02.2008**
(21) Anmeldenummer: 02758339.2
(22) Anmeldetag: 12.07.2002
(51) Int. Cl.: C09D 17/00, C09D 11/00

(54) **WASSERBASIERENDE PIGMENTDISPERSIONEN AUF ACRYLATBASIS**
PIGMENT DISPERSIONS BASED ON WATER AND ACRYLATE
DISPERSIONS PIGMENTAIRES BASEES SUR L'EAU ET SUR L'ACRYLATE

(30) Priorität: 19.07.2001 DE 10135140
(43) Veröffentlichungstag der Anmeldung: 06.05.2004
(73) Patentinhaber: Clariant Produkte (Deutschland) GmbH, 65929 Frankfurt am Main (DE)
(72) Erfinder: HARZ, Andreas, 65824 Schwalbach (DE); MENZEL, Heidemarie, 65812 Bad Soden (DE); MACHOLDT, Hans-Tobias, 64297 Darmstadt-Eberstadt (DE); MÜLLER, Michael, 65795 Hattersheim-Okriftel (DE)
(86) Internationale Anmeldenummer: PCT/EP2002/007794
(87) Internationale Veröffentlichungsnummer: WO 2003/008510

(56) Entgegenhaltungen:
- EP-A- 0 049 785
- EP-A- 0 712 912
- EP-A- 0 716 072
- GB-A- 2 349 153
- US-A- 6 099 627

## Beschreibung

Gegenstand der vorliegenden Erfindung sind wasserbasierende Pigmentpräparationen, Verfahren zu ihrer Herstellung, ihre Verwendung zum Färben und Bedrucken von natürlichen und synthetischen Fasermaterialien sowie Aufzeichnungsflüssigkeiten, insbesondere für das Tintenstrahl- oder ink-Jet-Verfahren, sowie elektrophotographische Toner, Pulverlacke und Farbfilter.

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden. Um Drucke hoher Schärfe und guter Auflösung zu erhalten, müssen die Aufzeichnungsflüssigkeiten sowie die darin enthaltenen Farbmittel hohen Anforderungen genügen, insbesondere im Hinblick auf Reinheit, Partikelfeinheit, Lagerstabilität, Viskosität, Oberflächenspannung und Leitfähigkeit. Insbesondere werden sehr hohe Anforderungen an die Farbstärke, Farbton, Brillanz und Echtheitseigenschaften, wie beispielsweise Lichtechtheit, Wasserechtheit und Reibechtheit gestellt. Eine hohe Lichtechtheit ist insbesondere von großer Bedeutung für Ink-Jet-Anwendungen in Außenbereichen und bei der Herstellung von Ink-Jet-Drucken mit photographischer Qualität.

Die Entwicklung von Farbstoffen, welche die gewünschte Kombination von Farbton, Brillanz, Farbstärke, Lichtechtheit und Wasserechtheit aufweisen, hat sich bisher als sehr schwierig erwiesen, so dass pigmentierte Tinten auf zunehmendes Interesse stoßen.

Bislang bekannte pigmentierte Ink-Jet-Präparationen erfüllen oftmals nicht die von der Ink-Jet-Industrie gestellten Anforderungen, da sie Defizite in der Feinverteilung, der Temperatur- und Lagerstabilität sowie oftmals auch ein Mangel an Verdruckbarkeit, insbesondere bei Thermodruckern, aufweisen.

Ein wichtiges Qualitätskriterium einer Ink-Jet-Präparation ist ihre Flockulationsbeständigkeit. Um die Düsen nicht zu verstopfen, müssen die Pigmentpartikel kleiner als 0,5 µm, vorzugsweise kleiner als 0,1 µm, sein. Außerdem muss Kristallwachstum oder eine Agglomeration der Teilchen wirksam verhindert werden. Dies geschieht meist durch bestimmte Dispergierhilfsmittel. Beim Verdrucken einer Ink-Jet-Tinte fließt diese mit hoher Geschwindigkeit durch die Düsen. Durch Scherung und Temperatureinfluss wird oftmals das stabilisierende Dispergierhilfsmittel von der Pigmentoberfläche entfernt. Das Pigment flockuliert und verstopft die Druckerdüsen. Ein weiteres Qualitätsmerkmal einer Ink-Jet-Tinte ist ihre Lagerstabilität, d.h. während der Lagerung dürfen die Pigmentteilchen nicht zu größeren Partikeln agglomerieren.

Es bestand daher die Aufgabe, Pigmentpräparationen zur Verfügung zu stellen, die die vorstehend genannten Anforderungen hinsichtlich Feinverteilung, Temperatur- und Lagerstabilität, Verdruckbarkeit und der Coloristik erfüllen.

Diese Aufgabe konnte überraschenderweise dadurch gelöst werden, dass das Pigment in einem speziellen, nachstehend definierten wasserlöslichen Acrylatharz in Kombination mit einem speziellen Dispergierhilfsmittel dispergiert wird. Bei der alleinigen Verwendung des Acrylatharzes erhält man vorzüglich lagerbeständige Pigmentpräparationen, jedoch ist keine ausreichende Verdruckbarkeit der Tinten gegeben. Auch die Verwendung anderer Dispergierhilfsmittel in Kombination mit dem Acrylatharz führt nicht zu verdruckbaren und lagerbeständigen Pigmentpräparationen. Das Zusetzen des erfindungsgemäßen Dispergierhilfsmittels führt zu einer schlechteren Löslichkeit des Acrylatharzes in der Flüssigkeit, so dass das Adsorptionsgleichgewicht des Harzes positiv zur Oberfläche des Pigmentes begünstigt wird. Dies verhindert ein Abscheren der Additive, bei hoher Fliessgeschwindigkeit in den feinen Düsen des Druckers, von der Pigmentoberfläche.

Gegenstand der vorliegenden Erfindung ist eine wässrige Pigmentpräparation, enthaltend ein in einer Acrylatharzlösung und Dispergierhilfsmittel dispergiertes organisches und/oder anorganisches Pigment, dadurch gekennzeichnet, dass das Acrylatharz ein Copolymer, bestehend im wesentlichen aus 50 bis 80 Mol-% Monoalkenylaromaten und 20 bis 50 Mol-% Acrylaten, ist und eine mittlere Molmasse Mᵥ zwischen 1000 und 50.000 g/mol hat, und dass das Dispergierhilfsmittel eine Verbindung der Formel (I) ist

R - O - (CH₂-CH₂-O)ₘ - CH₂ - COOM (I),

worin
- R: ein C₁₀-C₂₀-Alkylrest oder ein C₁₀-C₂₀-Alkenylrest,
- m: eine Zahl von 1 bis 15 und
- M: ein einwertiges Kation bedeutet.

Unter Monoalkenylaromaten werden insbesondere Monomere aus der Gruppe Styrol, α-Methyl-styrol, Vinyltoluol, tert.-Butyl-styrol, o-Chlor-styrol, sowie Gemische davon, verstanden.

Unter Acrylaten werden Monomere aus der Gruppe Acrylsäure, Methacrylsäure sowie Ester der Acryl- oder Methacrylsäure verstanden. Beispiele sind: Methylmethacrylat, Ethylmethacrylat, n-Propylmethacrylat, n-Butylmethacrylat, Isopropyl-methacrylat, lsobutyl-methacrylat, n-Amyl-methacrylat, n-Hexylmethacrylat, Iso-amyl-methacrylat, 2-Hydroxyethyl-methacrylat, 2-Hydroxypropylmethacrylat, N,N-Dimethylaminoethyl-methacrylat, N,N-Diethylaminoethylmethacrylat, t-Butylaminoethyl-methacrylat, 2-Sulfoethyl-methacrylat, Trifluorethylmethacrylat, Glycidyl-methacrylat, Benzyl-methacrylat, Allyl-methacrylat, 2-n-Butoxyethyl-methacrylat, 2-Chlorethyl-methacrylat, sec-Butyl-methacrylat, tert.-Butyl-methacrylat, 2-Ethylbutyl-methacrylat, Cinnamyl-methacrylat, Crotylmethacrylat, Cyclohexyl-methacrylat, Cyclopentyl-methacrylat, 2-Ethoxyethylmethacrylat, Furfuryl-methacrylat, Hexafluorisopropyl-methacrylat, Methallylmethacrylat, 3-Methoxybutyl-methacrylat, 2-Methoxybutyl-methacrylat, 2-Nitro-2-methylpropyl-methacrylat, n-Octylmethacrylat, 2-Ethylhexyl-methacrylat, 2-Phenoxyethyl-methacrylat, 2-Phenylethyl-methacrylat, Phenyl-methacrylat, Propargyl-methacrylat, Tetrahydrofurfuryl-methacrylat und Tetrahydropyranylmethacrylat, sowie die entsprechenden Ester der Acrylsäure.

Das Acrylatharz besteht vorzugsweise aus 60 bis 70 Mol-% Monoalkenylaromaten und 30 bis 40 Mol-% Acrylaten. Besonders bevorzugt sind Acrylatharze aus den Monomeren Styrol und (Meth)acrylsäure.

Die mittlere Molmasse Mv, bestimmt durch Gelpermeationschromatographie, beträgt vorzugsweise 5000 bis 25000 g/mol. Die erfindungsgemäß verwendeten Acrylatharze haben bevorzugt eine Säurezahl zwischen 110 und 250, insbesondere zwischen 190 und 220 mg KOH/g Acrylatharz;
weiterhin bevorzugt eine Glasübergangstemperatur Tg von 40 bis 140°C, bevorzugt 50 bis 140°C, z.B. 110 bis 140°C;
weiterhin bevorzugt eine Polydispersität von 1,5 bis 3,5, bevorzugt 1,5 bis 2,5, insbesondere von 2,0 bis 2,4;
weiterhin bevorzugt eine Dichte bei 25°C von 1,05 bis 1,3 g/cm³;
insbesondere von 1,1 bis 1,2 g/cm³;
weiterhin bevorzugt einen Schmelzbereich von 120 bis 160°C.

Das Acrylatharz wird zweckmäßigerweise in alkalisch wässriger Lösung oder ammoniakalischer Lösung eingesetzt, vorzugsweise als 1 bis 35 gew.-%ige, insbesondere 5 bis 30 gew.-%ige, Lösung.

Die vorstehend beschriebenen Acrylatharze können gemäß US 4,529,787 hergestellt werden.

Das erfindungsgemäß eingesetzte Acrylatharz kann geringe Mengen, wie z.B. 0,5 bis 2 Mol-%, einer zur Polymerisation befähigten oberflächenaktiven Verbindung im Copolymer enthalten.

Das Dispergierhilfsmittel der Formel (I) ist vorzugsweise eine Verbindung, worin R C₁₂-C₁₈-Alkyl oder C₁₂-C₁₈-Alkenyl bedeutet, insbesondere C₁₃-C₁₆-Alkyl oder C₁₃-C₁₆-Alkenyl.
Die Zahl m ist vorzugsweise 1 bis 10.
Das einwertige Kation M ist vorzugsweise Wasserstoff, ein Alkalimetall, insbesondere Na oder K, oder Ammonium.
Beispiele für Verbindungen der Formel (I) sind:
(C₁₃-C₁₅)-Alkyl-O-(CH₂CH₂-O)_{9.5}-CH₂COONa,
C₁₆H₃₃-O-(CH₂CH₂O)CH₂COONa,
C₁₈H₃₅-O-(CH₂CH₂O)CH₂COONa, 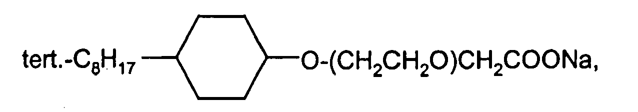 C₁₈H₃₅-O-(CH₂CH₂O)₈-CH₂COONa,
C₁₈H₃₇-O-(CH₂CH₂O)-CH₂COONa.
Derartige Verbindungen sind aus CH-A-324 665 und CH-A-283 986 bekannt.

Als organische Pigmente kommen insbesondere Monoazo-, Disazo-, verlackte Azo-, β-Naphthol-, Naphthol AS-, Benzimidazolon-, Disazokondensations-, Azo-Metallkomplex-Pigmente und polycyclische Pigmente wie zum Beispiel Phthalocyanin-, Chinacridon-, Perylen-, Perinon-, Thiazinindigo-, Thioindigo-, Anthanthron-, Anthrachinon-, Flavanthron-, Indanthron-, Isoviolanthron-, Pyranthron-, Dioxazin-, Chinophtalon-, Isoindolinon-, Isoindolin- und Diketopyrrolopyrrol-Pigmente oder Ruße in Betracht.

Als anorganische Pigmente kommen beispielsweise Titandioxide, Zinksulfide, Eisenoxide, Chromoxide, Ultramarin, Nickel- oder Chromantimontitanoxide, Cobaltoxide und Bismutvanadate in Betracht.

Die verwendeten Pigmente sollten möglichst feinteilig sein, wobei bevorzugt 95 % und besonders bevorzugt 99 % der Pigmentpartikel eine Teilchengröße ≤ 500 nm besitzen. Die mittlere Teilchengröße liegt vorzugsweise bei einem Wert < 200 nm.

In Abhängigkeit vom verwendeten Pigment kann sich die Morphologie der Pigmentteilchen sehr stark unterscheiden, und dementsprechend kann auch das Viskositätsverhalten der Pigmentpräparationen, in Abhängigkeit von der Teilchenform, sehr unterschiedlich sein. Um ein günstiges Viskositätsverhalten der Präparationen zu erhalten, sollten die Teilchen bevorzugt eine würfelförmige oder kugelförmige Gestalt besitzen. Bevorzugt werden gereinigte Pigmente eingesetzt. Als Auswahl besonders bevorzugter organischer Pigmente sind dabei Rußpigmente, wie z.B. Gas- oder Furnaceruße; Monoazo-, Disazo- und Benzimidazolonpigmente, insbesondere die Colour Index Pigmente Pigment Yellow 17, Pigment Yellow 74, Pigment Yellow 83, Pigment Yellow 97, Pigment Yellow 120, Pigment Yellow 128, Pigment Yellow 139, Pigment Yellow 151, Pigment Yellow 155, Pigment Yellow 180, Pigment Yellow 213, Pigment Red 57:1, Pigment Red 146, Pigment Red 176, Pigment Red 184, Pigment Red 185 oder Pigment Red 269; Phthalocyaninpigmente, insbesondere die Colour Index Pigmente Pigment Blue 15, Pigment Blue 15:3 oder Pigment Blue 15:4 und Chinacridonpigmente, insbesondere die Colour Index Pigmente Pigment Red 122 oder Pigment Violet 19 zu nennen.

Das Gewichtsverhältnis zwischen dem Pigment und dem Acrylatharz beträgt vorzugsweise 1: 0,05 bis 1:1, insbesondere 1: 0,2 bis 1: 0,5. Das Verhältnis von Pigment und Dispergiermittel der Formel (I) ist bevorzugt 1:0,05 bis 1:1 insbesondere 1: 0,2 bis 1:0,5.

Bevorzugte Pigmentpräparationen bestehen aus
a) 5 bis 50 Gew.-%, vorzugsweise 15 bis 25 Gew.-%, Pigment,
b) 0,25 bis 20 Gew.-%, vorzugsweise 1 bis 10 Gew.-%, des Acrylatharzes,
c) 1 bis 12 Gew.-%, vorzugsweise 2 bis 8 Gew.-%, einer Verbindung der Formel (I),
d) 5 bis 60 Gew.-%, vorzugsweise 10 bis 40 Gew.-% Wasser,
e) 0 bis 10 Gew.-%, vorzugsweise 0,1 bis 5 Gew.-%, eines organischen Lösemittels,
f) 0 bis 15 Gew.-%, vorzugsweise 5 bis 9 Gew.-%, einer hydrotropen Substanz,
g) 0 bis 10 Gew.-%, vorzugsweise 0,5 bis 9,5 Gew.-%, weiterer üblicher Zusatzstoffe,
jeweils bezogen auf das Gesamtgewicht der Pigmentpräparation.

Bei den in den vorstehend beschriebenen Pigmentpräparationen enthaltenen Lösungsmitteln kann es sich um ein organisches Lösungsmittel oder um ein Gemisch derartiger Lösungsmittel handeln. Geeignete Lösungsmittel sind beispielsweise ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 5 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butyl-ether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon, Toluol und n-Hexan.

Zur Herstellung der Pigmentpräparationen benutztes Wasser wird vorzugsweise in Form von destilliertem oder entsalztem Wasser eingesetzt.

Als hydrotrope Verbindungen, die gegebenenfalls auch als Lösungsmittel dienen, können beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Na-Xylolsulfonat, Na-Toluolsulfonat, Natrium-Cumolsulfonat, Na-Dodecylsulfonat, Na-Benzoat, Na-Salicylat oder Natrium-Butylmonoglykolsulfat eingesetzt werden.

Weiterhin können die erfindungsgemäßen Pigmentpräparationen noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin oder Diisopropylamin, dienen hauptsächlich zur Erhöhung des pH-Wertes der Pigmentpräparation, insbesondere Ink-Jet-Tinte. Sie sind normalerweise zu 0 bis 10 Gew.-%, vorzugsweise 0,5 bis 5 Gew.-% in der Pigmentpräparation und der daraus hergestellten Ink-Jet-Tinte, vorhanden.

Gegenstand der vorliegenden Erfindung ist auch ein Verfahren zur Herstellung solcher Pigmentpräparationen, dadurch gekennzeichnet, dass man das Pigment in der Acrylatharzlösung und dem Dispergierhilfsmittel der Formel (I) mit Hilfe eines Dispergieraggregates, vorzugsweise einer Rührwerkskugelmühle, die mit einer Rührwerksumfangsgeschwindigkeit von über 12 m/s betrieben wird und unter Einwirkung von nichtmetallischen Mahlkörpern vom Durchmesser kleiner oder gleich 1 mm, in Gegenwart von Wasser fein verteilt. Die übrigen Zusatzstoffe können bei der Feinverteilung zugegen sein und/oder anschließend zugegeben werden. Das Acrylatharz wird zweckmäßigerweise als wässrige Lösung, wie vorstehend beschrieben, eingesetzt.

Gegenstand der Erfindung ist auch die Verwendung der erfindungsgemäßen Pigmentpräparationen als Farbmittel für Tinten, insbesondere Ink-Jet-Tinten, elektrophotographische Toner, insbesondere Polymerisationstoner, Pulverlacke und Farbfilter.

Die erfindungsgemäßen Pigmentpräparationen sind geeignet als Farbmittel in elektrophotographischen Tonern und Entwicklern, wie z.B. Ein- oder Zweikomponentenpulvertonern (auch Ein- oder Zweikomponentenentwickler genannt) Magnettonern, Flüssigtonern, Polymerisationstonern, sowie weiteren Spezialtonern.
Typische Tonerbindemittel sind Polymerisations-, Polyadditions-, Polykondensationsharze, wie Styrol-, Styrolacrylat-, Styrolbutadien-, Acrylat-, Polyester-, Phenol-Epoxidharze, Polysulfone, Polyurethan, einzelne oder in Kombination, sowie Polyethylen und Polypropylen, die noch weitere Inhaltstoffe, wie Ladungssteuerungsmittel, Wachse, oder Fließhilfsmittel, enthalten können oder im Nachhinein zugesetzt werden können.
Des weiteren sind die erfindungsgemäßen Präparationen geeignet als Farbmittel in Pulver und Pulverlacken, insbesondere in triboelektrisch oder elektrokinetisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlacke werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Anwendung. So werden beispielsweise häufig Epoxidharze in Kombination mit carboxyl- und hydroxylgruppenhaltigen Polyesterharzen eingesetzt. Typische Härterkomponenten sind beispielsweise Säureanhydride, Imidazole sowie Dicyandiamid und deren Abkömmlinge, verkappte Isocyanate, Bisacylurethan, Phenol- und Melaminharze, Triglycidylisocyanurate, Oxazoline und Dicarbonsäuren.

Außerdem sind die erfindungsgemäßen Präparationen auch geeignet als Farbmittel für Farbfilter, sowohl für die additive wie für die substraktive Farberzeugung.

Unter Ink-Jet-Tinten versteht man sowohl Tinten auf wässriger (einschließlich Mikroemulsionstinten) und nicht-wässriger ("solvent-based") Basis, sowie solche Tinten, die nach dem Hot-melt-Verfahren arbeiten.

Mikroemulsionstinten basieren auf organischen Lösemitteln, Wasser und ggf. einer zusätzlichen hydrotropen Substanz (Grenzflächenvermittler). Tinten auf nichtwässriger Basis enthalten im wesentlichen organische Lösemittel und ggf. eine hydrotrope Substanz.

Gegenstand der vorliegenden Erfindung sind auch Ink-Jet-Aufzeichnungsflüssigkeiten, die im allgemeinen 0,5 bis 15 Gew.-%, vorzugsweise 1,5 bis 8 Gew.-%, der erfindungsgemäßen Pigmentpräparation, bezogen auf das Gesamtgewicht der Aufzeichnungsflüssigkeit, enthalten.
Mikroemulsionstinten bestehen im wesentlichen aus 0,5 bis 15 Gew.-%, vorzugsweise 1,5 bis 8 Gew.-%, der erfindungsgemäßen Pigmentpräparation, 5 bis 99 Gew.-% Wasser und 0,5 bis 94,5 Gew.-% organischem Lösungsmittel und/oder hydrotropen Verbindung.

"Solvent based" Ink-Jet-Tinten bestehen im wesentlichen aus 0,5 bis 15 Gew.-% der erfindungsgemäßen Pigmentpräparation, 85 bis 94,5 Gew.-% eines organischen Lösungsmittels und/oder hydrotroper Verbindung. Trägermaterialien für "Solvent based" Ink-Jet-Tinten können Polyolefine, Natur- und Synthesekautschuk, Polyvinylchlorid, Vinylchlorid/Vinylacetat-Copolymerisate, Polyvinylbutyrate, Wachs/Latex-Systeme oder Kombinationen davon, sein, die in dem "solvent" löslich sind.
Hot-Melt-Tinten basieren überwiegend auf organischen Verbindungen, wie Wachse, Fettsäuren, Fettalkohole oder Sulfonamide, die bei Raumtemperatur fest sind und bei Erwärmen flüssig werden, wobei der bevorzugte Schmelzbereich zwischen ca. 60°C und ca. 140°C liegt. Gegenstand der Erfindung ist auch eine Hot-Melt Ink-Jet-Tinte, bestehend im wesentlichen aus 20 bis 90 Gew.-% Wachs, 1 bis 10 Gew.-% der erfindungsgemäßen Pigmentpräparation, 0 bis 20 Gew.-% eines zusätzlichen Polymers (als "Farbstofflöser'), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans.

Die erfindungsgemäßen Ink-Jet-Tinten können hergestellt werden, indem die erfindungsgemäße Pigmentpräparation in das Mikroemulsionsmedium oder in das wässrige oder nicht-wässrige Medium oder in das Wachs zur Herstellung einer Hot-Melt Ink-Jet-Tinte eindispergiert wird.

Die Erfindung betrifft weiterhin einen Satz von Pigmentpräparationen, der mindestens je eine Farbmittelpräparation der Farben Schwarz, Cyan, Magenta und Gelb enthält und der dadurch gekennzeichnet ist, dass mindestens eine der Präparationen der erfindungsgemäßen Präparation entspricht.

Bevorzugt ist dabei ein Satz von Pigmentpräparationen, dessen schwarze Präparation Ruß als Farbmittel enthält, insbesondere einen Gas- oder Furnaceruß; dessen Cyan-Präparation ein Pigment aus der Gruppe der Phthalocyaninpigmente enthält, insbesondere die Colour Index Pigmente Pigment Blue 15, Pigment Blue 15:3 oder Pigment Blue 15:4; dessen Magenta-Dispersion ein Pigment aus der Gruppe der Chinacridone enthält, vorzugsweise Colour Index Pigment Red 122 oder Colour Index Pigment Violet 19, oder aus der Gruppe der Monoazo-, Disazo-, Isoindolin- oder Benzimidazolonpigmente enthält, insbesondere die Colour Index Pigmente Pigment Red 57:1, Pigment Red 146, Pigment Red 176, Pigment Red 184, Pigment Red 185 oder Pigment Red 269; und dessen Gelb-Präparation bevorzugt ein Pigment aus der Gruppe der Monoazo-, Disazo-, Isoindolin- oder Benzimidazolonpigmente enthält, insbesondere die Colour Index Pigmente Pigment Yellow 17, Pigment Yellow 74, Pigment Yellow 83, Pigment Yellow 97, Pigment Yellow 120, Pigment Yellow 128, Pigment Yellow 139, Pigment Yellow 151, Pigment Yellow 155, Pigment Yellow 180 oder Pigment Yellow 213.

Die Erfindung betrifft weiterhin einen Satz von Drucktinten, der wenigstens je eine Drucktinte der Farben Schwarz, Cyan, Magenta und Gelb enthält und des weiteren dadurch gekennzeichnet ist, dass mindestens eine der Drucktinten die erfindungsgemäße Pigmentpräparation in verdünnter oder unverdünnter Form mit oder ohne weitere Zusatzstoffe enthält.

Außer zum Bedrucken von Papier, natürlichen und synthetischen Fasermaterialien, Folien oder Kunststoffen, können Ink-Jet-Tinten auch auf Glas, Keramik, Beton u. ä. eingesetzt werden.

### Beispiele

In den nachstehenden Beispielen wird für die Acrylatlösung ein Acrylatharz verwendet, das durch folgende Merkmale gekennzeichnet ist:
Copolymer aus 60 - 70 Mol-% Monostyrol, 30 - 40 Mol-% Acrylsäure.

| | |
|---|---|
| Spezif. Masse: | 1150 kg/m³ |
| Säurezahl: | 214 |
| Glasübergangstemperatur: | 128°C |
| Molmasse: | 17 250 g/mol |
| Schmelzbereich: | 140-150°C |
| Polydispersität: | 2,3 |

Die Acrylatlösung selbst besteht aus 25 Gew.-% des Acrylats, 3,9 Gew.-% NaOH und 71,9 Gew.-% Wasser.

### Beispiel 1 Pigmentpräparation mit Pigment Blue 15:3 für Ink-Jet-Tinten

20 Teile C.I. Pigment Blue 15:3
25 Teile Acrylatlösung
5 Teile Dispergiermittel: R-O-(CH₂CH₂O)_{9.5}-CH₂COONa mit R = C₁₃-C₁₅-Alkyl
15 Teile Propylenglykol
0,2 Teile Konservierungsmittel
und 34,8 Teile Wasser werden mit einem Dissolver homogenisiert. Im Anschluss wird die Suspension mit einer Rührwerkskugelmühle (Typ Drais PML) mit Zirkonmischoxidmahlkörpern, Durchmesser 0,3 - 0,4 mm, gemahlen. Die erhaltene Pigmentpräparation wird mit Wasser auf 20 % Pigmentgehalt eingestellt.
Die Pigmentpräparation besitzt eine ausgezeichnete Fliessfähigkeit, Viskositätsstabilität und eine einwandfreie Flockulationsstabilität bei Lagerung über einen Monat bei Raumtemperatur und 60°C. Wässrige Verdünnungen dieses Pigmentkonzentrates von 3 % sind ebenfalls flockungsstabil.

### Beispiel 2 Pigmentpräparation mit Pigment Red 122 für Ink-Jet-Tinten

Eine Präparation, enthaltend
20 Teile C.I. Pigment Red 122
10 Teile Acrylatlösung
3 Teile Dispergiermittel: R-O-(CH₂CH₂O)_{9,5}-CH₂COONa mit R = C₁₃-C₁₅-Alkyl
15 Teile Propylenglykol
0,2 Teile Konservierungsmittel
51,8 Teile Wasser
wird, wie in Beispiel 1 beschrieben, hergestellt.

### Beispiel 3 Pigmentpräparation mit Pigment Yellow 155 für Ink-Jet-Tinten

Eine Präparation, enthaltend
20 Teile C.I. Pigment Yellow 155
25 Teile Acrylatlösung
5 Teile Dispergiermittel: R-O-(CH₂CH₂O)_{9,5}-CH₂COONa mit R = C₁₃-C₁₅-Alkyl
15 Teile Propylenglykol
0,2 Teile Konservierungsmittel
34,8 % Wasser
wird, wie in Beispiel 1 beschrieben, hergestellt.

### Beispiel 4 Pigmentpräparation mit Pigment Yellow 180 für Ink-Jet-Tinten

Eine Präparation, enthaltend
20 Teile C.I. Pigment Yellow 180
25 Teile Acrylatlösung
5 Teile Dispergiermittel: C₁₈H₃₅O(CH₂CH₂O)₁₂CH₂COONa
15 Teile Propylenglykol
0,2 Teile Konservierungsmittel
34,8 Teile Wasser
wird, wie in Beispiel 1 beschrieben, hergestellt.

### Beispiel 5 Pigmentpräparation mit Pigment Yellow 74 für Ink-Jet-Tinten

Eine Präparation, enthaltend
20 Teile C.I. Pigment Yellow 74
25 Teile Acrylatlösung
5 Teile Dispergiermittel: C₁₈H₃₅O(CH₂CH₂O)₁₂CH₂COONa
15 Teile Propylenglykol
0,2 Teile Konservierungsmittel
34,8 Teile Wasser
wird, wie in Beispiel 1 beschrieben, hergestellt.

### Beispiel 6 Pigmentpräparation mit Pigment Yellow 151 für Ink-Jet-Tinten

Eine Präparation, enthaltend
20 Teile C.I. Pigment Yellow 151
25 Teile Acrylatlösung
5 Teile Dispergiermittel: C₁₈H₃₅O(CH₂CH₂O)₁₂CH₂COONa
15 Teile Propylenglykol
0,2 Teile Konservierungsmittel
34,8 Teile Wasser
wird, wie in Beispiel 1 beschrieben, hergestellt.

### Beispiel 7 Pigmentpräparation mit Pigment Yellow 151 für Ink-Jet-Tinten

Eine Präparation, enthaltend
20 Teile PV-Echtgelb H2G
25 Teile Acrylatlösung
3 Teile Dispergiermittel: C₁₈H₃₅O(CH₂CH₂O)₁₂CH₂COONa
15 Teile Propylenglykol
0,2 Teile Konservierungsmittel
36,8 Teile Wasser
wird, wie in Beispiel 1 beschrieben, hergestellt.

### Beispiel 8 Pigmentpräparation mit Pigment Black 7 für Ink-Jet-Tinten

Eine Präparation, enthaltend
20 Teile Pigment Black 7
25 Teile Acrylatlösung
7 Teile Dispergiermittel: C₁₈H₃₅O(CH₂CH₂O)₁₂CH₂COONa
15 Teile Propylenglykol
0,2 Teile Konservierungsmittel
39,8 Teile Wasser
wird, wie in Beispiel 1 beschrieben, hergestellt.

### Beispiel 9 Pigmentpräparation mit Pigment Black 7 für Ink-Jet-Tinten

Eine Präparation, enthaltend
20 Teile Pigment Black 7
25 Teile Acrylatlösung
15 Teile Propylenglykol
7 Teile Dispergiermittel: C₁₈H₃₅O(CH₂CH₂O)₁₂CH₂COONa
0,2 Teile Konservierungsmittel
32,8 Teile Wasser
wird, wie in Beispiel 1 beschrieben, hergestellt.

Die in den vorstehenden Beispielen hergestellten Pigmentpräparationen sind hervorragend als Ink-Jet-Tinten geeignet. Die Viskosität bleibt sowohl bei Raumtemperatur als auch bei 4-wöchiger Lagerung bei 60°C stabil. Die Korngrößenverteilung der Pigmentpartikel ist auch bei Lagerung und tnermischer Belastung stabil. Bei den Ink-Jet-Tinten kommt es zu keiner Flockulation der Pigmentteilchen oder zum Verstopfen der Düsen.

## Patentansprüche

1. Wässrige Pigmentpräparation, enthaltend ein in einer Acrylatharzlösung und Dispergierhilfsmittel dispergiertes organisches und/oder anorganisches Pigment, **dadurch gekennzeichnet, dass** das Acrylatharz ein Copolymer, bestehend im wesentlichen aus 50 bis 80 Mol-% Monoalkenylaromaten und 20 bis 50 Mol-% Acrylaten, ist und eine mittlere Molmasse Mᵥ zwischen 1000 und 50.000 g/mol hat, und dass das Dispergierhilfsmittel eine Verbindung der Formel (I) ist
R - O - (CH₂-CH₂-O)ₘ - CH₂ - COOM (I),
worin
R ein C₁₀-C₂₀-Alkylrest oder ein C₁₀-C₂₀-Alkenylrest,
m eine Zahl von 1 bis 15 und
M ein einwertiges Kation bedeutet.

2. Pigmentpräparation nach Anspruch 1, **dadurch gekennzeichnet, dass** das Acrylatharz ein Copolymer aus 60 bis 70 Mol-% Monoalkenylaromaten und 30 bis 40 Mol-% Acrylaten ist.

3. Pigmentpräparation nach Anspruch 1 oder 2, **dadurch gekennzeichnet, dass** das Acrylat ein Monomer aus der Gruppe Acrylsäure, Methacrylsäure, Ester der Acrylsäure und Ester der Methacrylsäure ist.

4. Pigmentpräparation nach mindestens einem der Ansprüche 1 bis 3, **dadurch gekennzeichnet, dass** das Acrylat ein Methyl(meth)acrylat, Ethyl(meth)acrylat, n-Propyl(meth)acrylat, n-Butyl(meth)acrylat, Isopropyl-(meth)acrylat, Isobutyl-(meth)acrylat, n-Amyl-(meth)acrylat, n-Hexyl-(meth)acrylat, Iso-amyl-(meth)acrylat, 2-Hydroxyethyl-(meth)acrylat, 2-Hydroxypropyl-(meth)acrylat, N,N-Dimethylaminoethyl-(meth)acrylat, N,N-Diethylaminoethyl-(meth)acrylat, t-Butylaminoethyl-(meth)acrylat, 2-Sulfoethyl-(meth)acrylat, Trifluorethyl-(meth)acrylat, Glycidyl-(meth)acrylat, Benzyl-(meth)acrylat, Allyl-(meth)acrylat, 2-n-Butoxyethyl-(meth)acrylat, 2-Chlorethyl-(meth)acrylat, sec-Butyl-(meth)acrylat, tert.-Butyl-(meth)acrylat, 2-Ethylbutyl-(meth)acrylat, Cinnamyl-(meth)acrylat, Crotyl-(meth)acrylat, Cyclohexyl-(meth)acrylat, Cyclopentyl-(meth)acrylat, 2-Ethoxyethyl-(meth)acrylat, Furfuryl-(meth)acrylat, Hexafluorisopropyl-(meth)acrylat, Methallyl-(meth)acrylat, 3-Methoxybutyl-(meth)acrylat, 2-Methoxybutyl-(meth)acrylat, 2-Nitro-2-methylpropyl-(meth)acrylat, n-Octyl(meth)acrylat, 2-Ethylhexyl-(meth)acrylat, 2-Phenoxyethyl-(meth)acrylat, 2-Phenylethyl-(meth)acrylat, Phenyl-(meth)acrylat, Propargyl-(meth)acrylat, Tetrahydrofurfuryl-(meth)acrylat, Tetrahydropyranyl-(meth)acrylat oder eine Kombination davon ist.

5. Pigmentpräparation nach mindestens einem der Ansprüche 1 bis 4, **dadurch gekennzeichnet, dass** der Monoalkenylaromat ein Monomer aus der Gruppe Styrol, a-Methyl-styrol, Vinyltoluol, tert.-Butyl-styrol, o-Chlor-styrol oder eine Kombination davon ist.

6. Pigmentpräparation nach mindestens einem der Ansprüche 1 bis 5, **dadurch gekennzeichnet, dass** das Acrylatharz aus den Monomeren Styrol und Acrylsäure und/oder Methacrylsäure besteht.

7. Pigmentpräparation nach mindestens einem der Ansprüche 1 bis 6, **dadurch gekennzeichnet, dass** das organische Pigment ein Monoazo-, Disazo-, verlacktes Azo-, β-Naphthol-, Naphthol AS-, Benzimidazolon-, Disazokondensations-, Azo-Metallkomplex-Pigment oder ein polycyclisches Pigment, insbesondere ein Phthalocyanin-, Chinacridon-, Perylen-, Perinon-, Thiazinindigo-, Thioindigo-, Anthanthron-, Anthrachinon-, Flavanthron-, Indanthron-, Isoviolanthron-, Pyranthron-, Dioxazin-, Chinophtalon-, Isoindolinon-, Isoindolin- oder Diketopyrrolopyrrol-Pigment oder ein Ruß ist.

8. Pigmentpräparation nach mindestens einem der Ansprüche 1 bis 7, **dadurch gekennzeichnet, dass** das Gewichtsverhältnis zwischen dem Pigment und dem Acrylatharz 1: 0,05 bis 1:1, insbesondere 1: 0,2 bis 1: 0,5, beträgt.

9. Pigmentpräparation nach mindestens einem der Ansprüche 1 bis 8, bestehend aus
a) 5 bis 50 Gew.-%, vorzugsweise 15 bis 25 Gew.-%, Pigment,
b) 0,25 bis 20 Gew.-%, vorzugsweise 1 bis 10 Gew.-%, des Acrylatharzes,
c) 1 bis 12 Gew.-%, vorzugsweise 2 bis 8 Gew.-%, einer Verbindung der Formel (I),
d) 5 bis 60 Gew.-%, vorzugsweise 10 bis 40 Gew.-% Wasser,
e) 0 bis 10 Gew.-%, vorzugsweise 0,1 bis 5 Gew.-%, eines organischen Lösemittels,
f) 0 bis 15 Gew.-%, vorzugsweise 5 bis 9 Gew.-%, einer hydrotropen Substanz,
g) 0 bis 10 Gew.-%, vorzugsweise 0,5 bis 9,5 Gew.-%, weiterer üblicher Zusatzstoffe,
jeweils bezogen auf das Gesamtgewicht der Pigmentpräparation.

10. Verfahren zur Herstellung von Pigmentpräparationen nach einem oder mehreren der Ansprüche 1 bis 9, **dadurch gekennzeichnet, dass** man das Pigment in der Acrylatharzlösung und dem Dispergierhilfsmittel der Formel (I) mit Hilfe eines Dispergieraggregates, vorzugsweise einer Rührwerkskugelmühle, die mit einer Rührwerksumfangsgeschwindigkeit von über 12 m/s betrieben wird und unter Einwirkung von nichtmetallischen Mahlkörpern vom Durchmesser kleiner oder gleich 1 mm, fein verteilt.

11. Verwendung einer Pigmentpräparation nach einem oder mehreren der Ansprüche 1 bis 9 als Farbmittel für Drucktinten, insbesondere für Ink-Jet-Tinten, elektrophotographische Toner, insbesondere Polymerisationstoner, Pulverlacke und Farbfilter.

12. Satz von Farbmittelpräparationen, der mindestens je eine Farbmittelpräparation der Farben Schwarz, Cyan, Magenta und Gelb enthält, **dadurch gekennzeichnet, dass** mindestens eine der Präparationen eine wässrige Pigmentpräparation nach einem oder mehreren der Ansprüche 1 bis 9 ist.

13. Satz von Farbmittelpräparationen gemäß Anspruch 12, **dadurch**
**gekennzeichnet, dass**
das Farbmittel der schwarzen Farbmittelpräparation ein Ruß, vorzugsweise ein Gas- oder Furnaceruß ist,
das Farbmittel der cyan-farbigen Farbmittelpräparation ein Pigment aus der Gruppe der Phthalocyaninpigmente, vorzugsweise Colour Index P. Blue 15, P. Blue 15:3 oder P. Blue 15:4,
das Farbmittel der magenta-farbigen Farbmittelpräparation ein Pigment aus der Gruppe der Chinacridonpigmente, vorzugsweise ein Colour Index P. Red 122 oder P. Violet 19 ist, oder ein Pigment aus der Gruppe der Monoazo-, Disazo-, Isoindolin- oder Benzimidazolonpigmente, vorzugsweise ein Colour Index P. Red 57:1, P. Red 146, P. Red 176, P. Red 184, P. Red 185 oder P. Red 269 ist, und das Farbmittel der gelben Farbmittelpräparation ein Pigment aus der Gruppe der Monoazo-, Disazo-, oder Benzimidazolonpigmente, vorzugsweise Colour Index P. Yellow 17, P. Yellow 74, P. Yellow 83, P. Yellow 97, P. Yellow 120, P. Yellow 128, P. Yellow 139, P. Yellow 151, P. Yellow 155, P. Yellow 180 oder P. Yellow 213 ist.

14. Satz von Farbmittelpräparationen nach Anspruch 12 oder 13, **dadurch gekennzeichnet, dass** die jeweiligen Farbmittelpräparationen Drucktinten, insbesondere Ink-Jet-Tinten, sind.

## Claims

1. An aqueous pigment preparation, comprising an organic and/or inorganic pigment dispersed in an acrylate resin solution and dispersing aid, wherein the acrylate resin is a copolymer composed essentially of from 50 to 80 mol% of monoalkenyl aromatics and from 20 to 50 mol% of acrylates and has an average molar mass Mᵥ of between 1 000 and 50 000 g/mol and wherein the dispersing aid is a compound of the formula (I)
R - O - (CH₂-CH₂-O)ₘ - CH₂ - COOM (I)
in which
R is a C₁₀-C₂₀ alkyl radical or a C₁₀-C₂₀ alkenyl radical,
m is a number from 1 to 15, and
M is a monovalent cation.

2. The pigment preparation as claimed in claim 1, wherein the acrylate resin is a copolymer of from 60 to 70 mol% of monoalkenyl aromatics and from 30 to 40 mol% of acrylates.

3. The pigment preparation as claimed in claim 1 or 2, wherein the acrylate is a monomer from the group consisting of acrylic acid, methacrylic acid, esters of acrylic acid, and esters of methacrylic acid.

4. The pigment preparation as claimed in at least one of claims 1 to 3, wherein the acrylate is a methyl (meth)acrylate, ethyl (meth)acrylate, n-propyl (meth)acrylate, n-butyl (meth)acrylate, isopropyl (meth)acrylate, isobutyl (meth)acrylate, n-amyl (meth)acrylate, n-hexyl (meth)acrylate, isoamyl (meth)acrylate, 2-hydroxyethyl (meth)acrylate, 2-hydroxypropyl (meth)acrylate, N,N-dimethylaminoethyl (meth)acrylate, N,N-diethylaminoethyl (meth)acrylate, t-butylaminoethyl (meth)acrylate, 2-sulfoethyl (meth)acrylate, trifluoroethyl (meth)acrylate, glycidyl (meth)acrylate, benzyl (meth)acrylate, allyl (meth)acrylate, 2-n-butoxyethyl (meth)acrylate, 2-chloroethyl (meth)acrylate, sec-butyl (meth)acrylate, tert-butyl (meth)acrylate, 2-ethylbutyl (meth)acrylate, cinnamyl (meth)acrylate, crotyl (meth)acrylate, cyclohexyl (meth)acrylate, cyclopentyl (meth)acrylate, 2-ethoxyethyl (meth)acrylate, furfuryl (meth)acrylate, hexafluoroisopropyl (meth)acrylate, methallyl (meth)acrylate, 3-methoxybutyl (meth)acrylate, 2-methoxybutyl (meth)acrylate, 2-nitro-2-methylpropyl (meth)acrylate, n-octyl (meth)acrylate, 2-ethylhexyl (meth)acrylate, 2-phenoxyethyl (meth)acrylate, 2-phenylethyl (meth)acrylate, phenyl (meth)acrylate, propargyl (meth)acrylate, tetrahydrofurfuryl (meth)acrylate and tetrahydropyranyl (meth)acrylate, or a combination thereof.

5. The pigment preparation as claimed in at least one of claims 1 to 4, wherein the monoalkenyl aromatic is a monomer from the group consisting of styrene, α-methylstyrene, vinyltoluene, tert-butylstyrene, and o-chlorostyrene, or a combination thereof.

6. The pigment preparation as claimed in at least one of claims 1 to 5, wherein the acrylate resin is composed of the monomers styrene and acrylic acid and/or methacrylic acid.

7. The pigment preparation as claimed in at least one of claims 1 to 6, wherein the organic pigment is a monoazo, disazo, laked azo, β-naphthol, naphthol AS, benzimidazolone, disazo condensation or azo metal complex pigment or a polycyclic pigment, especially a phthalocyanine, quinacridone, perylene, perinone, thiazine indigo, thioindigo, anthanthrone, anthraquinone, flavanthrone, indanthrone, isoviolanthrone, pyranthrone, dioxazine, quinophthalone, isoindolinone, isoindoline or diketopyrrolopyrrole pigment or a carbon black.

8. The pigment preparation as claimed in at least one of claims 1 to 7, wherein the weight ratio between the pigment and the acrylate resin is from 1:0.05 to 1:1, in particular from 1:0.2 to 1:0.5.

9. The pigment preparation as claimed in at least one of claims 1 to 8, composed of
a) from 5 to 50% by weight, preferably from 15 to 25% by weight, of pigment,
b) from 0.25 to 20% by weight, preferably from 1 to 10% by weight, of the acrylate resin,
c) from 1 to 12% by weight, preferably from 2 to 8% by weight, of a compound of the formula (I),
d) from 5 to 60% by weight, preferably from 10 to 40% by weight, of water,
e) from 0 to 10% by weight, preferably from 0.1 to 5% by weight, of an organic solvent,
f) from 0 to 15% by weight, preferably from 5 to 9% by weight, of a hydrotropic substance,
g) from 0 to 10% by weight, preferably from 0.5 to 9.5% by weight, of further customary additives,
based in each case on the total weight of the pigment preparation.

10. A process for preparing a pigment preparation as claimed in one or more of claims 1 to 9, which comprises finely dispersing the pigment in the acrylate resin solution and the dispersing aid of the formula (I) by means of a dispersing apparatus, preferably a stirred ball mill, which is operated with a peripheral stirrer speed of more than 12 m/s, employing nonmetallic grinding media with a diameter of less than or equal to 1 mm.

11. The use of a pigment preparation as claimed in one or more of claims 1 to 9 as a colorant for printing inks, especially for inkjet inks, electrophotographic toners, especially addition-polymerization toners, powder coating materials, and color filters.

12. A set of colorant preparations comprising at least one colorant preparation in each of the colors black, cyan, magenta, and yellow, wherein at least one of the preparations is an aqueous pigment preparation as claimed in one or more of claims 1 to 9.

13. A set of colorant preparations as claimed in claim 12, wherein the colorant of the black colorant preparation is a carbon black, preferably a gas black or furnace black,
the colorant of the cyan colorant preparation is a pigment from the group of the phthalocyanine pigments, preferably Colour Index P. Blue 15, P. Blue 15:3 or P. Blue 15:4,
the colorant of the magenta colorant preparation is a pigment from the group of the quinacridone pigments, preferably a Colour Index P. Red 122 or P. Violet 19, or a pigment from the group of the monoazo, disazo or benzimidazolone pigments, preferably a Colour Index P. Red 57:1, P. Red 146, P. Red 176, P. Red 184, P. Red 185 or P. Red 269, and
the colorant of the yellow colorant preparation is a pigment from the group of the monoazo, disazo or benzimidazolone pigments, preferably Colour Index P. Yellow 17, P. Yellow 74, P. Yellow 83, P. Yellow 97, P. Yellow 120, P. Yellow 128, P. Yellow 139, P. Yellow 151, P. Yellow 155, P. Yellow 180 or P. Yellow 213.

14. A set of colorant preparations as claimed in claim 12 or 13, wherein the respective colorant preparations are each printing inks, especially inkjet inks.

## Revendications

1. Préparation aqueuse de pigment contenant un pigment organique et/ou inorganique dispersé dans une solution de résine acrylate, et un auxiliaire de dispersion,
**caractérisé en ce que**
la résine acrylate est un copolymère, constitué essentiellement de 50 à 80 % en moles d'aromatiques de monoalcényle et 20 à 50 % en moles d'acrylates et a une masse molaire moyenne Mᵥ comprise entre 1000 et 50.000 g/mole, et l'auxiliaire de dispersion est un composé de formule (I)
R - O - (CH₂-CH₂-O)ₘ-CH₂-COOM (I),
dans laquelle
R est un radical alkyle en C₁₀ à C₂₀ ou un radical alcényle en C₁₀ à C₂₀,
m est un nombre de 1 à 15 et
M représente un cation monovalent.

2. Préparation de pigment selon la revendication 1,
**caractérisée en ce que**
la résine acrylate est un copolymère de 60 à 70 % en moles d'aromatiques de monoalcényle et de 30 à 40 % en moles d'acrylates.

3. Préparation de pigment selon la revendication 1 ou la revendication 2,
**caractérisée en ce que**
l'acrylate est un monomère du groupe acide acrylique, acide méthacrylique, ester de l'acide acrylique et ester de l'acide méthacrylique.

4. Préparation de pigment selon au moins l'une des revendications 1 à 3,
**caractérisé en ce que**
l'acrylate est un (méth)acrylate de méthyle, un (méth)acrylate d'éthyle, un (méth)acrylate de n-propyle, un (méth)acrylate de n-butyle, un (méth)acrylate d'isopropyle, un (méth) acrylate d'isobutyle, un (méth)acrylate de n-amyle, un (méth)acrylate de n-hexyle, un (méth)acrylate d'iso-amyle, un (méth)acrylate de 2-hydroxyéthyle, un (méth)acrylate de 2-hydroxypropyle, un (méth)acrylate de N,N-diméthylaminoéthyle, un (méth)acrylate de N,N-diéthylaminoéthyle, un (méth)acrylate de t-butylaminoéthyle, un (méth)acrylate de 2-sulfoéthyle, un (méth)acrylate de trifluoroéthyle, un (méth)acrylate de glycidyle, un (méth)acrylate de benzyle, un (méth)acrylate d'allyle, un (méth)acrylate de 2-n-butoxyéthyle, un (méth)acrylate de 2-chloréthyle, un (méth)acrylate de sec-butyle, un (méth)acrylate de tert-butyle, un (méth)acrylate de 2-éthylbutyle, un (méth)acrylate de cinnamyle, un (méth)acrylate de crotyle, un (méth)acrylate de cyclohexyle, un (méth)acrylate de cyclopentyle, un (méth)acrylate de 2-éthoxyéthyle, un (méth)acrylate de furfuryle, un (méth)acrylate d'hexafluorisopropyle, un (méth)acrylate de méthallyle, un (méth)acrylate de 3-méthoxybutyle, un (méth)acrylate de 2-méthoxybutyle, un (méth)acrylate de 2-nitro-2-méthylpropyle, un (méth)acrylate de n-octyle, un (méth)acrylate de 2-éthylhexyle, un (méth)acrylate de 2-phénoxyéthyle, un (méth)acrylate de 2-phénoxyéthyle, un (méth)acrylate de phényle, un (méth)acrylate de propargyle, un (méth)acrylate de tétrahydrofurfuryle, un (méth)acrylate de tétrahydropyranyle ou une combinaison de ces substances.

5. Préparation de pigment selon au moins l'une des revendications 1 à 4,
**caractérisée en ce que**
l'aromatique de monoalcényle est un monomère du groupe styrène, α-méthylstyrène, vinyltoluène, tert-butylstyrène, o-chlorostyrène ou une combinaison de ces substances.

6. Préparation de pigment selon au moins l'une des revendications 1 à 5,
**caractérisée en ce que**
la résine acrylate est constituée des monomères styrène et acide acrylique et/ou acide méthacrylique.

7. Préparation de pigment selon au moins l'une des revendications 1 à 6,
**caractérisée en ce que**
le pigment organique est un pigment monoazo, diazo, azo vernis, β-naphtol, naphtol AS, benzimidazolone, de condensation diazo, complexe métallique azo ou bien un pigment polycyclique, en particulier un pigment à base de phtalocyanine, de quinacridone, de pérylène, de périnone, de thiazine indigo, de thioindigo, d'anthanthrone, d'anthraquinone, de flavanthrone, d'indanthrone, d'isoviolanthrone, de pyranthrone, de dioxazine, de quinophtalone, d'isoindolinone, d'isoindoline ou de dicétopyrrolopyrol ou bien un noir de carbone.

8. Préparation de pigment selon au moins l'une des revendications 1 à 7,
**caractérisée en ce que**
le rapport pondéral entre le pigment et la résine acrylate est de 1:0,05 à 1:1, en particulier de 1:0,2 à 1:0,5.

9. Préparation de pigment selon au moins l'une des revendications 1 à 8,
constituée de
a) 5 à 20 % en poids, de préférence 15 à 25 % en poids de pigment,
b) de 0,25 à 20 % en poids, de préférence de 1 à 10 % en poids de résine acrylate,
c) de 1 à 12 % en poids, de préférence de 2 à 8 % en poids d'un composé de formule (I),
d) de 5 à 60 % en poids, de préférence de 10 à 40 % en poids d'eau,
e) de 0 à 10 % en poids, de préférence de 0,1 à 5 % en poids d'un solvant organique,
f) de 0 à 15 % en poids, de préférence de 5 à 9 % en poids d'une substance hydrotrope,
g) de 0 à 10 % en poids, de préférence de 0,5 à 9,5 % en poids d'autres additifs usuels,
respectivement par rapport au poids total de la préparation de pigment.

10. Procédé de fabrication de préparations de pigment selon l'une ou plusieurs des revendications 1 à 9,
**caractérisé en ce que**
le pigment est finement réparti dans la solution de résine acrylate et l'auxiliaire de dispersion de formule (I) à l'aide d'un disperseur, de préférence d'un broyeur à billes à agitateur, fonctionnant à une vitesse périphérique de l'agitateur supérieure à 12 m/s et sous l'action de corps de broyage non métalliques d'un diamètre inférieur ou égal à 1 mm.

11. Utilisation d'une préparation de pigment selon l'une ou plusieurs des revendications 1 à 9 en tant que colorant pour encres d'imprimerie, en particulier pour encres pour impression à jet d'encre, toners électrophotographiques, en particulier les toners de polymérisation, les vernis et peintures à la poudre et les filtres colorés.

12. Jeu de préparations de colorants contenant au moins chacune une préparation de colorant de couleur noire, cyan, magenta et jaune,
**caractérisé en ce qu'**
au moins l'une des préparations est une préparation aqueuse de pigment selon l'une ou plusieurs des revendications 1 à 9.

13. Jeu de préparations de colorants selon la revendication 12,
**caractérisé en ce que**
le colorant de la préparation de colorant noire est un noir de carbone, de préférence un noir de gaz de pétrole ou un noir de fourneau,
le colorant de la préparation de colorant de couleur cyan est un pigment du groupe des pigments à base de phtalocyanine, de préférence Colour Index P. Blue 15, P. Blue 15:3 ou P. Blue 15:4,
le colorant de la préparation de colorant de couleur magenta est un pigment du groupe des pigments à base de quinacridone, de préférence un Colour Index P. Red 122 ou P. Violet 19, ou bien un pigment du groupe des pigments monoazo, diazo, isoindoline ou benzimidazolone, de préférence un Colour Index P. Red 57:1, P. Red 146, P. Red 176, P. Red 184, P. Red 185 ou P. Red 269 et le colorant de la préparation de colorant jaune est un pigment du groupe des pigments monoazo, diazo ou à base de benzimidazolone, de préférence Colour Index P. Yellow 17, P. Yellow 74, P. Yellow 83, P. Yellow 97, P. Yellow 120, P. Yellow 128, P. Yellow 139, P. Yellow 151, P. Yellow 155, P. Yellow 180 ou P. Yellow 213.

14. Jeu de préparations de colorants selon la revendication 12 ou la revendication 13,
**caractérisé en ce que**
les différentes préparations de colorants contiennent des encres d'imprimerie, en particulier des encres pour impression à jet d'encre.
